Europäisches Patentamt

European Patent Office

Office européen des brevets

(11) Veröffentlichungsnummer: **0 017 929**
**A2**

(12) **EUROPÄISCHE PATENTANMELDUNG**

(21) Anmeldenummer: 80101952.2

(51) Int. Cl.³: **A 01 K 1/015**

(22) Anmeldetag: 11.04.80

(30) Priorität: **14.04.79 DE 7910947 U**

(43) Veröffentlichungstag der Anmeldung: **29.10.80**
**Patentblatt 80/22**

(84) Benannte Vertragsstaaten: **AT BE CH DE FR GB IT LI LU NL SE**

(71) Anmelder: **Schmidt, Elisabeth, Liptinger Strasse 10, D-7706 Eigeltingen 2 (DE)**
Anmelder: **Herz, Johanna, Schlachthausstrasse 4, D-7700 Singen (DE)**

(72) Erfinder: **Schmidt, Elisabeth, Liptinger Strasse 10, D-7706 Eigeltingen 2 (DE)**
Erfinder: **Herz, Johanna, Schlachthausstrasse 4, D-7700 Singen (DE)**

(54) **Bodenelement für Stallböden.**

(57) Es ist bekannt, Stallböden, insbesondere für die Schweinezucht, aus Bodenelementen zusammenzusetzen, die aus einer langgestreckten Metallplatte (1) mit an der Unterseite in Längsrichtung verlaufenden Stegen (5, 6) bestehen, die zur Versteifung und zur gegenseitigen Verbindung der Bodenelemente dienen. Die Metallplatte (1) ist mit Lochungen (2) für den Durchtritt von Harn und Kot versehen. Um die Verletzung von Tieren, insbesondere der Klauen und Zitzen von Schweinen, zu verhindern, sind erfindungsgemäß die Ränder (3) der Lochungen (2) nach unten gezogen und in ihrer unteren Randzone (4) auseinandergebördelt. Dadurch ergeben sich bei geringer Materialstärke und damit geringem Gewicht der Bodenelemente tiefe Lochungen, deren Ränder mit großem Krümmungsradius abgerundet sind.

EP 0 017 929 A2

0017929

Johanna Herz, geb. Denzel
Schlachthausstraße 4
D - 7700  Singen

Elisabeth Schmidt, geb. Braun
Liptinger Straße 10
D - 7706 Eigeltingen 2

Bodenelement für Stallböden

Die  Erfindung betrifft ein Bodenelement für Stallböden,
insbesondere für die Schweinezucht, bestehend aus einer
langgestreckten Metallplatte mit an der Unterseite in
Längsrichtung verlaufenden Stegen und mit in Reihen angeordneten Lochungen.

Gelochte Bodenelemente dieser Art, wie sie z.B. aus dem
DE-GM 77 23 889 bekannt sind, werden zur Bildung von kot-
und harndurchlässigen Stallböden aneinandergereiht. Die
Bodenelemente werden aus Metallprofilen hergestellt. Ebenso ist es bekannt, solche Bodenelemente aus Blech herzustellen, das z.B. durch Abkanten zu U-förmigen Elementen
verformt wird. Die Bodenelemente können meist freitragend

0017929

insbesondere bei den kürzeren Spannweiten der Teilspaltenböden eingesetzt werden. Die runden oder langgestreckten
Lochungen in der Metallplatte dienen als Kot- und Harndurchlaß.

Aus Strangpreßprofilen hergestellte Bodenelemente weisen
häufig noch zusätzliche, längs verlaufende Mittelstege
zwischen den Reihen der Lochungen auf, um die Steifigkeit
und damit die freitragende Weite zu vergrößern.

Zur Verringerung der Verletzungsgefahr für Klauen und Zitzen
der Schweine ist es bekannt, die Ränder der in die relativ
dünne Metallplatte eingestanzten Lochungen einseitig oder
beidseitig abzurunden. Bei den üblicherweise verwendeten
Materialstärken von 2 bis 3 mm ist jedoch ein Abrunden, auch
wenn es auf beiden Seiten erfolgt, nicht völlig ausreichend.
Werden die Ränder der Lochung beim Stanzvorgang etwas nach
unten gezogen, um an der Oberseite eine größere Abrundung zu
erzielen, so entstehend an der Unterseite scharfe Abreißkanten, an denen sich das Schwein bei entsprechend ungünstiger
Bewegung sogar empfindlich verletzen kann.

Weiter sind Bodenelemente aus Gußmetall z.B. aus dem DE-GM
77 23 636 bekannt. Diese bestehen aus längs verlaufenden,
im Querschnitt sich tropfenförmig nach unten verjüngenden
Tragstäben, die in Abständen von ca. 20 - 30 cm durch entsprechend geformte Querstege miteinander verbunden sind. Die
Formgebung der Tragstäbe und der Querstege schließt Verletzungen aus. Aufgrund ihrer Konstruktion sind diese Bodenelemente jedoch äußerst schwer und in den Herstellungsabmessungen
begrenzt. Zum Belegen eines Stallbodens mit diesen Bodenelementen ist daher zusätzlich eine Unterkonstruktion erforderlich.

Der Erfindung liegt die Aufgabe zugrunde, ein Bodenelement
der eingangs genannten Gattung so zu verbessern, daß Verletzungen der Tiere, insbesondere an Klauen und Zitzen der
Schweine, vollständig verhindert werden können. Die Bodenelemente sollen dabei leicht und ohne Unterkonstruktion
freitragend einsetzbar sein. Diese Aufgabe wird erfindungsgemäß dadurch gelöst, daß die Ränder der Lochungen nach unten gezogen und in ihrer unteren Randzone auseinandergebördelt sind. Zusätzlich können die Kanten der auseinandergebördelten Randzonen gebrochen oder gerundet sein.

Vorteilhafte Ausführungsformen und Weiterbildungen der Erfindung sind in den Unteransprüchen angegeben.

Trotz der relativ geringen Stärke der für die Bodenelemente
verwendeten Metallplatte ergeben sich durch das Nach-Unten-
Ziehen und Auseinanderbördeln der Ränder der Lochungen Öffnungen verhältnismäßig großer Tiefe, deren Rand über die
gesamte Tiefe gleichmäßig mit großem Krümmungsradius abgerundet ist. Durch das Auseinanderbördeln ist es nahezu unmöglich, daß ein Schwein mit der Klaue oder Zitze mit der
unteren Kante des nach unten gezogenen Randes der Lochung
in Berührung kommt. Die Verletzungsgefahr ist daher auf ein
Minimu reduziert. Sind die unteren Kanten der Ränder außerdem noch gerundet oder gebrochen, so sind Verletzungen selbst dann ausgeschlossen, wenn das Schwein doch mit dieser Kante in Berührung kommen sollte.

Das Bodenelement liefert somit trotz seiner geringen Materialstärke und seines dadurch bedingten geringen Gewichts eine Sicherheit, die bisher nur mit sehr dickwandigen und damit sehr schweren, Unterkonstruktionen notwendig machenden Gußbodenelement erreicht werden konnte.

Die Erfindung wird im folgenden anhand eines in der Zeichnung dargestellten Ausführungsbeispieles näher erläutert. Es zeigen:

Figur 1        eine Draufsicht auf einen Ausschnitt eines erfindungsgemäßen Bodenelementes,

Figur 2        einen Schnitt längs der Linie I-I in Figur 1,

Figur 3        einen Schnitt längs der Linie II-II in Figur 1 und

Figur 4        perspektivisch einen Teil des Bodenelementes.

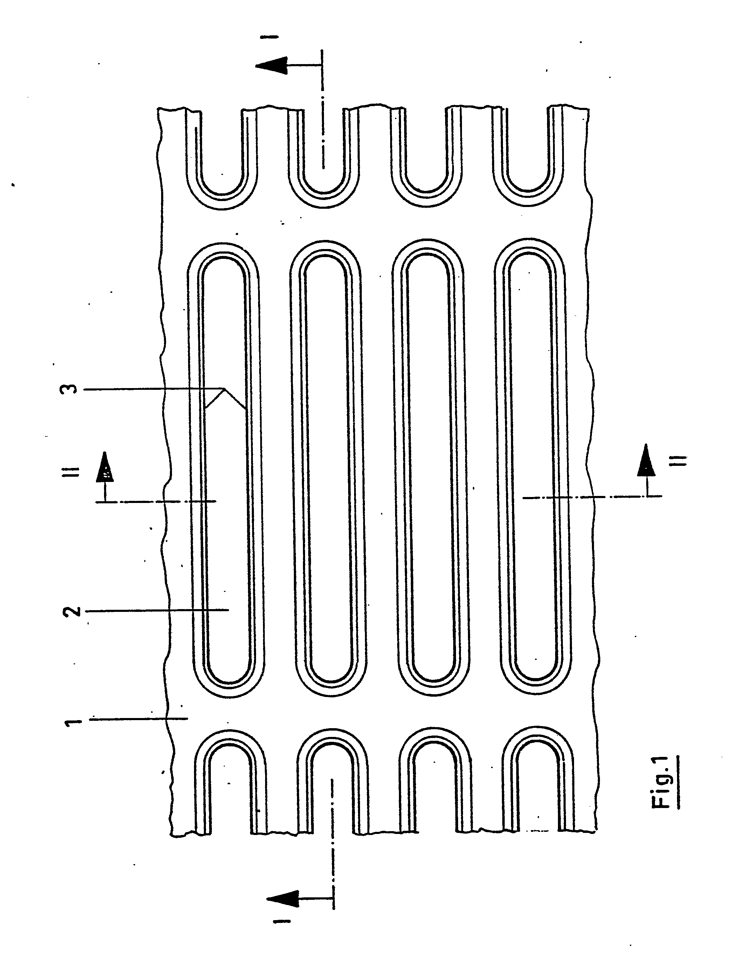

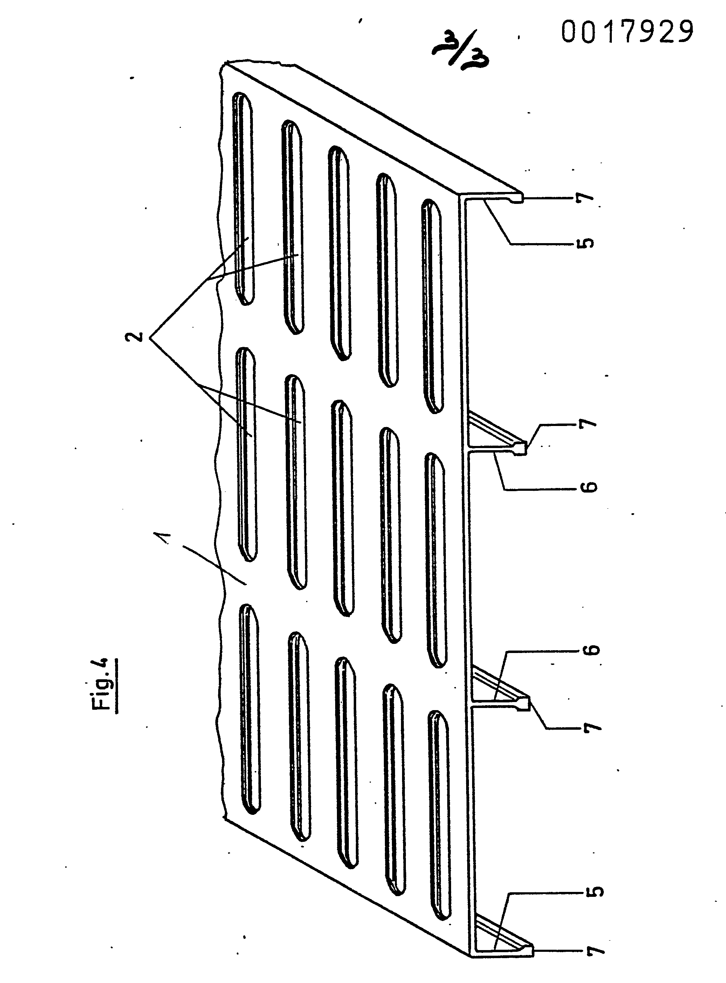

Das Bodenelement besteht, wie die Figuren 1 und 4 am deutlichsten zeigen, aus einer langgestreckten Metallplatte, die durch in Reihen angeordnete länglich Lochungen 2 durchbrochen ist. Im Beispiel der Figur 4 sind drei parallele in Längsrichtung des Bodenelementes verlaufende Reihen von Lochungen 2 vorgesehen, die jeweils quer zur Längsrichtung des Bodenelementes langgestreckt sind. Die Form und die Anordnung der Lochungen 2 sind im Hinblick auf die Erfindung jedoch von untergeordneter Bedeutung.

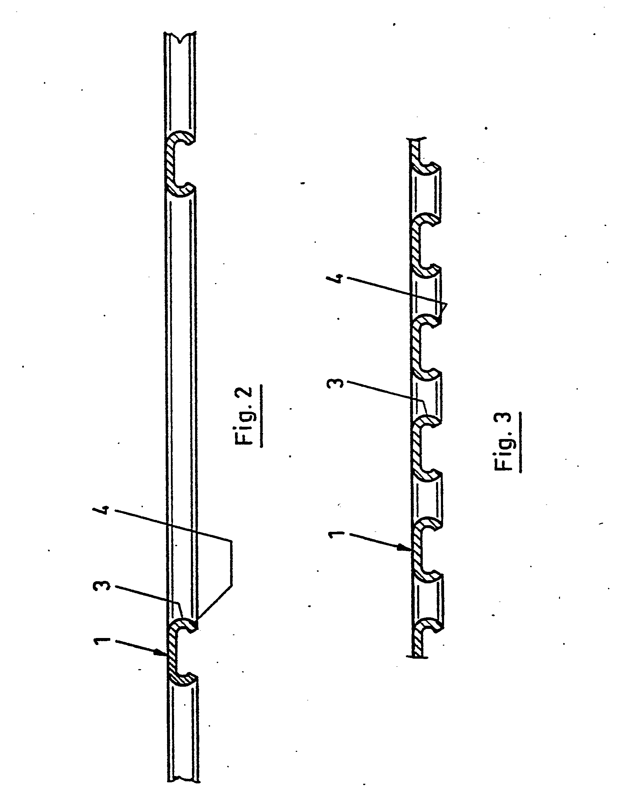

Wie die Figuren 2 und 3 zeigen, sind die Ränder 3 der Lochungen nach unten gezogen und in ihrer unteren Randzone 4 auseinandergebördelt. Dadurch ergibt sich ein Rand der Lochungen mit gleichmäßiger Krümmung und großem Krümmungsradius. Trotz der geringen Materialstärke der Metallplatte 1 entspricht das Bodenelement in Bezug auf den Rand der Lochungen 2 einem Bodenelement sehr viel größerer Materialstärke mit Lochungen, deren Rand von oben und unten abgerundet ist, wie aus den Figuren 2 und 3 zu erkennen ist.

Die unteren Kanten der Randzone 4 sind zusätzlich abgerundet oder gebrochen.

Die Ausbildung der Metallplatte 1 und der Lochungen 2, wie sie aus den Figuren 1 bis 3 hervorgeht, kann aus Blech hergestellt werden, wobei insbesondere wegen der hohen Korrosionsbeständigkeit Stahl- oder Aluminiumblech bevorzugt wird. Bei Herstellung der Bodenelemente aus Blech werden die in Längsrichtung verlaufenden Ränder der Metallplatte 1 durch Abkanten zu nach unten gerichteten Randstegen abgewinkelt, die dem Bodenelement seine Längssteifigkeit verleihen und zum Verbinden der aneinander anliegenden Bodenelemente dienen.

0017929

Die in Figur 4 gezeigte Form des Bodenelementes eignet sich zur Herstellung aus Strangpreßprofil, insbesondere aus Aluminiumprofil. Entlang der Längskanten der Metallplatte 1 ragen Randstege 5 nach unten. Zwischen den Reihen von Lochungen 2 sind weiter in Längsrichtung verlaufende, nach unten ragende Stege 6 vorgesehen, die zusätzlich zur Längsversteifung und Abstützung dienen und die Tragfähigkeit und Spannweite vergrößern. Die Stege 5 und 6 weisen unten eine flanschartige Verbreiterung 7 auf, die die Tragfähigkeit und Steifigkeit weiter erhöhen. Die Verbreiterungen 7 sind bei den mittleren Stegen 6 symmetrisch ausgebildet, während sie bei den Randstegen 5 nur nach innen weisend ausgebildet sind, um ein vollständiges Aneinanderanliegen der benachbarten Bodenelemente zu ermöglichen.

　　　　　　　　0017929

## PATENTANSPRÜCHE

1. Bodenelement für Stallböden, insbesondere für die
   Schweinezucht, bestehend aus einer langgestreckten
   Metallplatte mit an der Unterseite in Längsrichtung
   verlaufenden Stegen und mit in Reihen angeordneten
   Lochungen, dadurch gekennzeichnet, daß die Ränder (3)
   der Lochungen (2) nach unten gezogen und in ihrer
   unteren Randzone (4) auseinander-gebördelt sind.

2. Bodenelement nach Anspruch 1, dadurch gekennzeichnet,
   daß die Kante der auseinandergebördelten Randzone (4)
   gebrochen oder gerundet ist.

3. Bodenelement nach Anspruch 1 oder 2, dadurch gekennzeichnet, daß die Stege (5, 6) an ihrem unteren Ende
   flanschförmige Verbreiterungen (7) aufweisen.

4. Bodenelement nach einem der Ansprüche 1 bis 3, dadurch
   gekennzeichnet, daß es aus Aluminium besteht.

5. Bodenelement nach einem der Ansprüche 1 bis 3, dadurch
   gekennzeichnet, daß es aus Stahl besteht.

Fig.1

1  3  4

Fig. 2

1  3  4

Fig. 3

# Fig.4

2/2

0017929